(19) Europäisches Patentamt / European Patent Office / Office européen des brevets

(11) EP 3 388 569 B1

## (12) EUROPEAN PATENT SPECIFICATION

(45) Date of publication and mention
of the grant of the patent:
**04.12.2019 Bulletin 2019/49**

(51) Int Cl.:
***D06F 37/22*** *(2006.01)*

(21) Application number: **18166495.4**

(22) Date of filing: **10.04.2018**

(54) **WASHING MACHINE AND METHOD OF CONTROLLING THE SAME**

WASCHMASCHINE UND VERFAHREN ZUR STEUERUNG DAVON

MACHINE À LAVER ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.04.2017 KR 20170046235**

(43) Date of publication of application:
**17.10.2018 Bulletin 2018/42**

(60) Divisional application:
**19204546.6**

(73) Proprietor: **LG Electronics Inc.**
**Yeongdeungpo-gu**
**SEOUL**
**07336 (KR)**

(72) Inventors:
• **MOON, Byunghyun**
 **08592 Seoul (KR)**
• **KWON, Oshin**
 **08592 Seoul (KR)**

(74) Representative: **Vossius & Partner**
**Patentanwälte Rechtsanwälte mbB**
**Siebertstrasse 3**
**81675 München (DE)**

(56) References cited:
**KR-A- 20130 114 478     US-A1- 2012 192 362**
**US-A1- 2013 327 099**

## Description

### 1. Field of the invention

The present disclosure relates generally to a washing machine and a method of controlling the same and, more particularly, to a washing machine having an actively movable balancer and a method of controlling the same.

### 2. Description of the Related Art

Generally, a washing machine is an appliance for performing washing, rinsing, and spin-drying cycles to remove contaminants from clothing, bedding, and the like (hereinafter referred to as "laundry") by using water, detergent, and mechanical operations.

The washing machine is provided with a balancer to reduce imbalance which occurs when laundry in a drum is unevenly distributed. As the balancer used in the washing machine, a ball balancer or a liquid balancer is used. However, there is a problem that the ball balancer or the liquid balancer moves passively in response to rotation of a drum, such that as the ball balancer or the liquid balancer moves to an opposite side of the center of mass of laundry, and accordingly, the drum continuously rotates until the imbalance is reduced. In order to solve such a problem, a method of actively moving the balancer is suggested.

The actively movable balancer is controlled to move to the opposite side of the center of gravity of the laundry. It is necessary to grasp the position of the balancer in order to control the balancer, but it is difficult to grasp the position of the balancer by rotating together with the drum when the drum rotates.

KR 2013 0114478 A relates to a washing machine which is provided to supply power to actively moving a balancing unit. The washing machine includes a drum, a guide rail, and a balancing unit. The drum houses clothes, bedding, and so on, and is rotatable. The guide rail is coupled to one edge of the drum. The balancing unit moves along the guide rail, and varies the gravitational center of the drum.

It is an object of the present invention to provide a washing machine capable of positively detecting a position of a movable balancer, and a method of controlling the same. These objects are solved with the features of the claims.

The object of the present invention are not limited to the aforementioned object and other objects undescribed herein will be clearly understood by those skilled in the art from the following description.

The above and other objects can be accomplished by providing a washing machine including: a tub containing wash water; a drum having a cylindrical shape, rotatably provided in the tub, and to accommodate laundry; a balancing unit moving along a circumference of the drum; and a transmission coil provided at the tub, and to generate a magnetic field and transmit power wirelessly to the balancing unit. In accordance with the present invention, the balancing unit comprises: a reception coil to generate electric power from the magnetic field formed by the transmission coil; and a position sensing unit to sense the magnetic field formed by the transmission coil, and to generate a position signal when the balancing unit passes through the transmission coil. Accordingly, a position of the balancing unit may be determined.

The balancing unit may further include a receiving communication unit to transmit the position signal generated by the position sensing unit.

The washing machine may further include: a transmission communication unit which receives the position signal transmitted by a receiving communication unit; a drum motor to rotate the drum; a hall sensor which detects a rotation angle of the drum motor; and a transmission controller which determines a position of the balancing unit from the position signal and the rotation angle of the drum motor detected by the hall sensor.

The balancing unit is provided with a plurality includes a first balancing unit and a second balancing unit. The hall sensor generates a pulse signal for each set unit angle, and the transmission controller can calculate an angle between the first balancing unit and the second balancing unit by counting a number of pulse signals until the position signal generated from the second balancing unit is received after the position signal generated from the first balancing unit is received.

The position sensing unit may include: a cylindrical inductor component to generate an electromotive force from the magnetic field formed by the transmission coil; and a zener diode element to generate a position signal by adjusting the electromotive force generated by the inductor component to a constant voltage magnitude.

The inductor component may be arranged such that an upper surface of the cylindrical shape faces a surface formed by the transmission coil.

Further, in accordance with the present invention, the above object can be accomplished by providing a method of controlling a washing machine, the method including: receiving a position signal generated by a position sensing unit to sense the magnetic field formed by a transmission coil, and when a first balance unit passes through the transmission coil; counting a pulse signal for each set unit angle generated by a hall sensor detecting a rotation angle of the drum motor rotating a drum; receiving the position signal generated by the position sensing unit to sense the magnetic field formed by the transmission coil when the second balancing unit passes through the transmission coil; and calculating an angle between the first balancing unit and the second balancing unit from a number of pulse signals and the unit angle which are received after receipt of the position signal generated from the first balancing unit and before receipt of the position signal generated from the second balancing unit, Accordingly, a position of the balancing unit may be determined.

The hall sensor generates the pulse signal for each set unit angle, and the angle between the first balancing unit and the second balancing unit can be calculated from the number of the pulse signals and the unit angle.

The specifics of other embodiments are included in the detailed description and drawings.

## EFFECTS OF THE INVENTION

The washing machine and method of controlling the same of the present disclosure have one or more of the following effects.

First, there is an advantage that it is possible to determine a relative position of a plurality of dispersion units by constructing a circuit of a simple element for detecting the magnetic field of the transmission coil.

Secondly, there is also an advantage of accurately detecting the magnetic field of the transmission coil by appropriately arranging the inductor components.

Thirdly, there is also an advantage that the relative position of a plurality of dispersion units can be determined by using a hall sensor that detects the rotation angle of the drum motor.

Fourthly, there is also an advantage that it is possible to calculate the angle between a plurality of dispersion units using the pulse signal of the hall sensor and the position signal generated by the inductor component.

Effects of the present invention should not be limited to the aforementioned effects and other unmentioned effects will be clearly understood by those skilled in the art from the claims.

## BRIEF DESCRIPTION OF THE DRAWINGS

FIG. 1 is a cross-sectional view of a washing machine according to an embodiment of the present invention.

FIG. 2 is a perspective view of a tub of a washing machine according to an embodiment of the present invention.

FIG. 3 is a perspective view of a drum of a washing machine according to an embodiment of the present invention.

FIG. 4 is a partial perspective view of a washing machine according to an embodiment of the present invention.

FIG. 5 is a partial cross-sectional view of a washing machine according to an embodiment of the present invention.

FIG. 6 is an exploded perspective view of a balancing unit of a washing machine according to an embodiment of the present invention.

FIG. 7 is a block diagram of a washing machine according to an embodiment of the present invention.

FIG. 8 is a circuit diagram of a position detecting unit of a washing machine according to an embodiment of the present invention.

FIG. 9 is a view exemplifying generation of a position signal in the position detecting unit of the washing machine according to the embodiment of the present invention.

FIG. 10 is a flowchart of a method of controlling a washing machine according to an embodiment of the present invention.

FIG. 11 is a diagram showing how to determine a position of a balancing unit of a washing machine according to the embodiment of the present invention.

## DETAILED DESCRIPTION OF THE EMBODIMENTS

Advantages and features of the present disclosure and methods for accomplishing the same will be more clearly understood from exemplary embodiments described below with reference to the accompanying drawings. However, the present disclosure is not limited to the following embodiments, but may be implemented in various different forms. The embodiments are provided only to complete disclosure of the present disclosure and to fully provide a person having ordinary skill in the art to which the present disclosure pertains with the category of the present disclosure, and the present disclosure will be defined by the scope of the appended claims. Like reference numerals generally denote like elements through the specification.

Hereinafter, embodiments of the present disclosure will be described in detail with reference to the accompanying drawings for explaining a washing machine and a method of controlling the same.

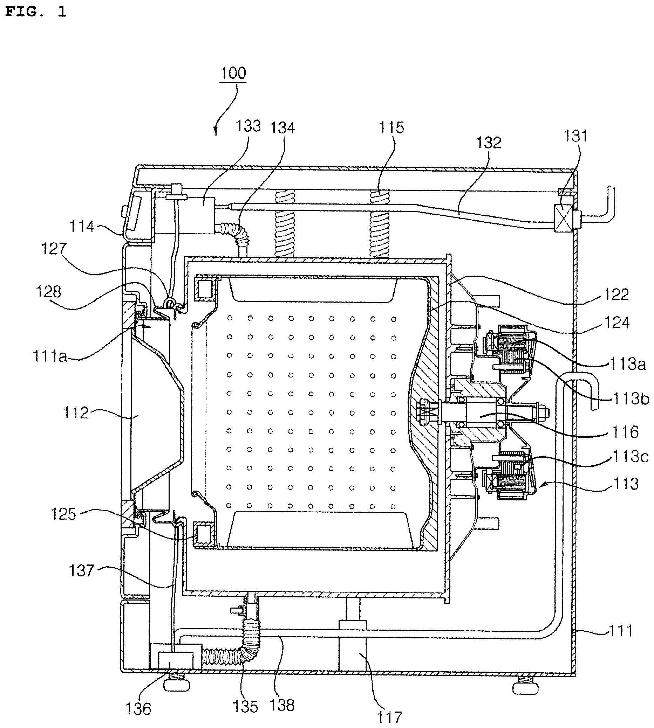

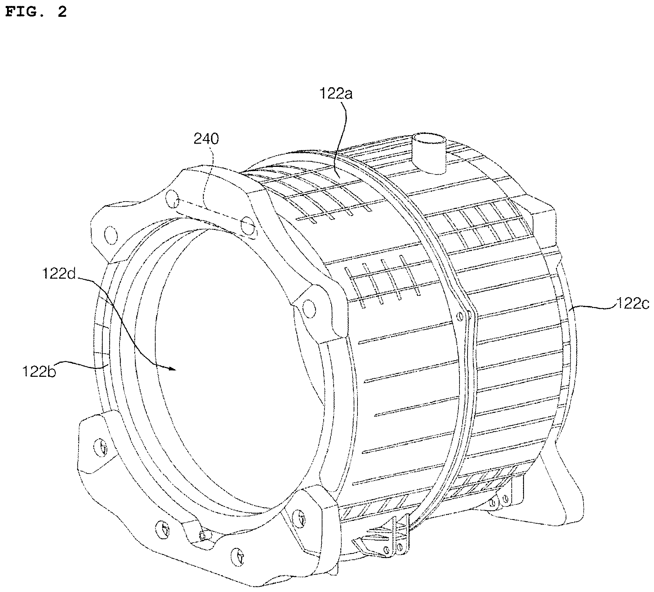

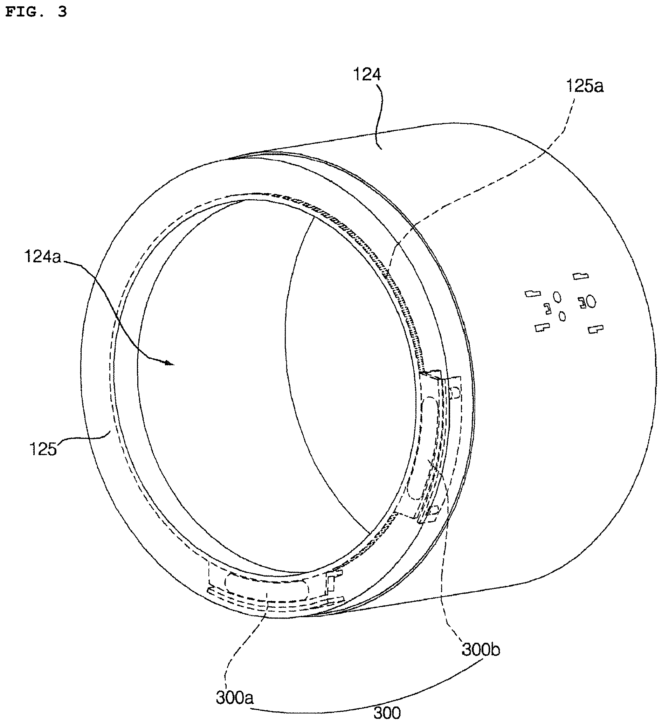

FIG. 1 is a cross-sectional view of a washing machine according to an embodiment of the present invention; FIG. 2 is a perspective view of a tub of a washing machine according to an embodiment of the present invention; and FIG. 3 is a perspective view of a drum of a washing machine according to an embodiment of the present invention.

A washing machine 100 according to an embodiment of the present disclosure includes: a cabinet 111 which forms an external appearance of the washing machine 100; a door 112 which opens and closes one side of the cabinet 111 so that laundry may be put into the cabinet 111; a tub 122 which is provided in the cabinet 111 and supported by the cabinet 111 and in which wash water is contained; a drum 124 having a cylindrical shape, which is provided in the tub 122 and which rotates when the laundry is loaded; a drum motor 113 which provides torque to the drum 124 to rotate the drum 124; a balancing unit 300 which moves along the circumference of the drum 124 to reduce imbalance caused by unbalanced distribution of laundry leaning to one side when the drum 124 rotates; a detergent box 133 in which detergent is held; and a control panel 114 which receives a user's input and displays status of a washing machine.

The cabinet 111 is provided with a laundry inlet hole 111a, through which laundry is loaded into the cabinet 111. The door 112 is rotatably connected with the cabinet 111 to open and close the laundry inlet hole 111a. The cabinet 111 is provided with the control panel 114. The cabinet 111 is provided with the detergent box 133 which may be withdrawn therefrom.

A spring 115 and a damper 117 are provided in the cabinet 111 to absorb shock of the tub 122. The tub 122 contains wash water. The tub 122 is disposed outside the drum 124 to surround the drum 124.

The tub 122 includes: a tub main body 122a having a cylindrical shape and both ends which are open; a front tub cover 122b having a ring shape and disposed at a front side of the tub main body 122a; a rear tub cover 122c having a disc shape and disposed at a rear side of the tub main body 122a. Hereinafter, the front side refers to the side of the door 112, and the rear side refers to the side of the drum motor 113. A tub hole 122d is formed at the front tub cover 122b. The tub hole 122d is formed to communicate with the laundry inlet hole 111a to allow the laundry to be put into the drum 124.

The drum motor 113 is provided at the rear tub cover 122c to generate torque. The drum motor 113 is connected with a rotation axis 116 to rotate the drum 124. The drum motor 113 may rotate the drum 124 at various speeds and directions. The drum motor 113 includes: a stator 113a wound with a coil; and a rotor 113b which rotates by generating electromagnetic interaction with the coil.

The stator 113a is provided with a plurality of winded coils. The rotor 113b is provided with a plurality of magnets for electromagnetic interaction with the coils. The rotor 113b rotates by the electromagnetic interaction between the coil and the magnet, and the rotational force of the rotor 113b is transmitted to the drum 124 to rotate the drum 124.

The drum motor 113 is provided with a hall sensor 113c for detecting the rotation angle of the rotor 113b. The hall sensor 113c generates a pulse signal whenever the rotor 113b rotates by a set unit angle. The speed and position of the rotor 113b are estimated using the pulse signal generated by the hall sensor 113c.

The rotation axis 116 connects the drum motor 113 with the drum 124. The rotation axis 116 transfers torque of the drum motor 113 to the drum 124 to rotate the drum 124. One end of the rotation axis 116 is connected to the center of rotation at the rear side of the drum 124, and the other end of the rotation axis 116 is connected with the rotor 113b of the drum motor 113.

The drum 124 rotates with the laundry loaded therein. The drum 124 is disposed in the tub 122. The drum 124 is formed in a cylindrical shape and is rotatable. The drum 124 has a plurality of through-holes through which wash water may pass. The drum 124 rotates by receiving the torque of the drum motor 213.

A drum hole 124a is provided at a front side of the drum 124. The drum hole 124a is formed to communicate with the laundry inlet hole 111a and the tub hole 122d so that the laundry may put into the drum 124. A guide rail 125 is connected to a front and/or a rear circumference of the drum 124. In the embodiment, the guide rail 125 is provided on a front circumference of the drum 124.

A gasket 128 seals a space between the tub 122 and the cabinet 111. The gasket 128 is interposed between the opening of the tub 122 and the laundry inlet hole 111a. The gasket 128 absorbs shock which is delivered to the door 112 when the drum 124 rotates, and prevents wash water in the tub 122 from leaking to the outside. The gasket 128 may be provided with a circulation nozzle 127 which sprays wash water into the drum 124.

The detergent box 133 may hold a detergent, a fabric softener, bleach, and the like. The detergent box 133 may be retractably provided at the front surface of the cabinet 111. When wash water is supplied, the detergent in the detergent box 133 is mixed with the wash water to be introduced into the tub 122.

The cabinet 111 may include: a water supply valve 131 which adjusts introduction of the wash water supplied from an external water source; a water supply passage 132 through which the wash water, introduced into the water supply valve, flows to the detergent box 133; and a water supply pipe 134 through which the wash water, mixed with the detergent in the detergent box 133, is introduced into the tub 122.

The cabinet 111 may include: a drain pipe 135 through which the wash water in the tub 122 is drained; a pump 136 which discharges the wash water in the tub 122; a circulation passage 137 which circulates the wash water; a circulation nozzle 127 which introduces the wash water is into the drum 124; and a drain passage 138 through which the wash water is drained to the outside. In some implementations, the pump 136 may include a circulation pump and a drain pump which may be connected to the circulation passage 137 and the drain passage 138 respectively.

A plurality of balancing units 300 move along the guide rail 125 of the drum 124, to change the center of gravity

of the drum 124. In this case, the center of gravity of the drum 124 does not refer to the center of mass of the drum 124 itself, but refers to a common center of gravity of objects, including the drum 124, the laundry which is loaded in the drum 124, the guide rail 125, the plurality of balancing units 300, and other elements attached to the drum 24, which rotate along with the drum 124 when the drum 124 rotates.

The plurality of balancing units 300 move along the front circumference of the drum 124, to adjust the center of gravity of the drum 124 when laundry is unevenly distributed. When the drum 124 rotates with the unbalanced laundry leaning to one side, vibration and noise are caused by imbalance, in which a geometrical center of the rotation axis 116 (the center of gravity) of the drum 124 does not coincide with a real center of gravity of the drum 124. The plurality of balancing units 300 may reduce the imbalance of the drum 124 by causing the center of gravity of the drum 124 to be close to the rotation axis 116. In this embodiment, the plurality of balancing units 300 are two units of a first balancing unit 300a and a second balancing unit 300b.

The plurality of balancing units 300 move actively along the guide rail 125. The active movement refers to movement of the plurality of balancing units 300 along the guide rail 125 by using their own power.

The guide rail 125 is a passage where the plurality of balancing units 300 move. The guide rail 125 is formed in a ring shape and is connected to a front end circumference of the drum 124.

A transmission coil 240 for wireless power transmission to the plurality of balancing units 300 is disposed at the front tub cover 122b and/or the rear tub cover 122c. In this embodiment, the transmission coil 240 is disposed at the front tub cover 122b. The transmission coil 240 is disposed at a position facing the guide rail 125. The transmission coil 240 wirelessly transmits power to the plurality of balancing units 300 as a coil generating a magnetic field.

The control panel 114 may include: an input unit (not shown) which receives user inputs for various operations, for example, selecting a washing course, a time required for each execution, reservation, etc.;; and a display unit (not shown) which displays an operation state of the washing machine 100.

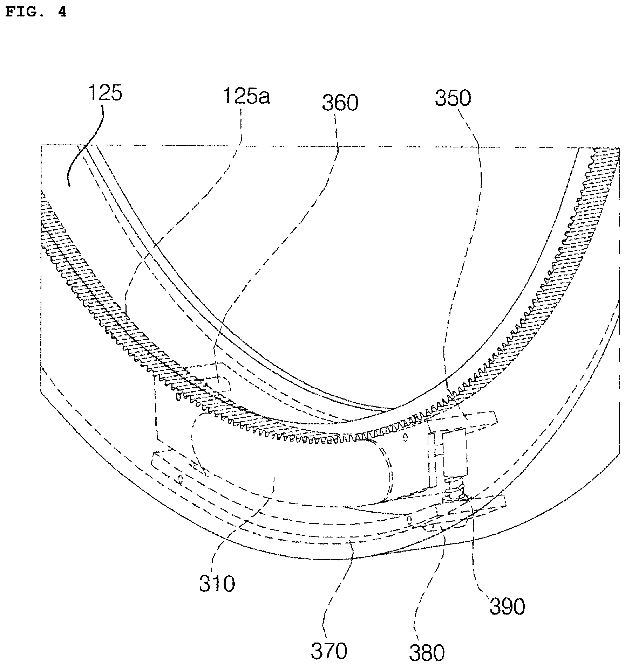

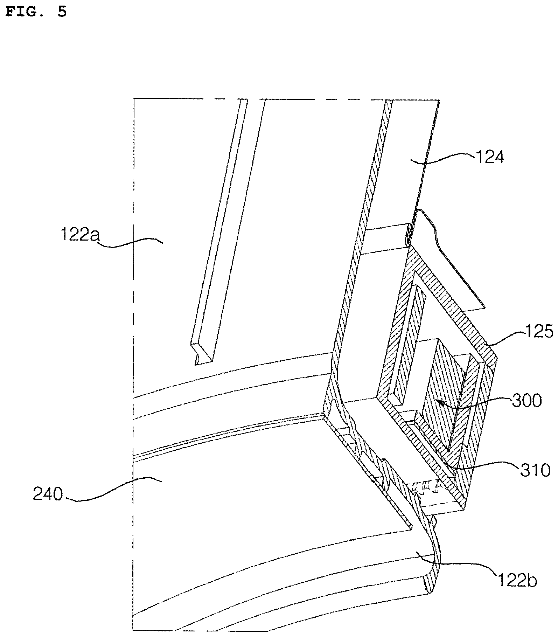

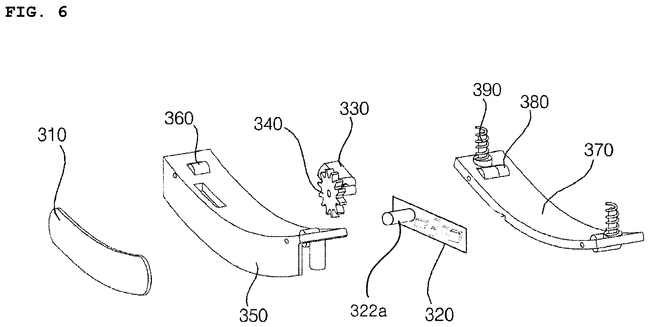

FIG. 4 is a partial perspective view of a washing machine according to an embodiment of the present invention; FIG. 5 is a partial cross-sectional view of a washing machine according to an embodiment of the present invention; and FIG. 6 is an exploded perspective view of a balancing unit of a washing machine according to an embodiment of the present invention.

The balancing unit 300 according to an embodiment of the present invention includes: a reception coil 310 which generates electric power from the magnetic field formed by the transmission coil 240; a driving module 330 which generates driving power by using the electric power generated by the reception coil 310; a pinion gear 340 which rotates by receiving the driving power from the driving module 330; an upper frame 350 which includes the driving module 330 and the pinion gear 340; a lower frame 370 which is slidably connected with the upper frame 350; an elastic body 390 interposed between the upper frame 350 and the lower frame 370; and an electronic component module 320 in which electronic components are included.

The reception coil 310 generates electric power from the magnetic field formed by the transmission coil 240. The reception coil 310 is disposed on a surface that faces the tub 122 of the upper frame 350 so as to oppose the transmission coil 240. The reception coil 310 is formed as a coil which generates electric power from a magnetic field.

The driving module 330 may generate driving power by using electric power, which is supplied from an external source and transmitted wirelessly through the transmission coil 240 and the reception coil 310. The driving module 330 may be a motor which generates torque. The driving module 330 rotates the pinion gear 340. In the case where the driving module 330 is a motor, a worm gear (not shown) is interposed between the motor and the pinion gear 340 such that the worm gear rotates the pinion gear 340. The driving module 330 may be disposed at the upper frame 350.

The pinion gear 340 rotates by receiving driving power from the driving module 330. A rack gear 125a is disposed on an inner diameter surface of the guide rail 125; and the pinion gear 340 is engaged with the rack gear 125a.

The rack gear 125a is formed along the inner diameter surface of the guide rail 125. The cross-section of the guide rail 125 is formed in a square shape, and the inner diameter surface of the guide rail 125 refers to a surface which is located close to the center of rotation of the drum 124 among the inner side surfaces of the guide rail 125.

The pinion gear 340 rotates while being engaged with the rack gear 125a to actively move the balancing unit 300. As the pinion gear 340 is engaged with the rack gear 125a, the balancing unit 300 may be prevented from moving freely by the dead load or rotation of the drum 124.

The upper frame 350 forms the frame of the balancing unit 300. The upper frame 350 is disposed on the inner diameter surface of the guide rail 125. The upper frame 350 has a side surface which is formed in an arc shape so as to move along the guide rail 125.

The upper frame 350 includes the driving module 330, the pinion gear 340, the electronic component module 320, an upper roller 360, and the transmission coil 240. The upper frame 350 is connected with the lower frame 370, and the elastic body 390 is interposed between the upper frame 350 and the lower frame 370.

The electronic component module 320 may include various electronic components, which are provided for driving the driving module 330 by using electric power generated by the reception coil 310.

The electronic component module 320 may include an inductor component 322a which generates an electromotive force by a magnetic field formed by the transmission coil 240. The inductor component 322a is a radial type inductor component and is formed into a cylindrical shape.

The upper roller 360 is rotatably provided at the upper frame 350. The upper roller 360 may roll while being firmly pressed against the inner diameter surface of the guide rail 125. The upper roller 360 is provided to prevent the upper frame 350 from being directly in contact with the inner diameter surface of the guide rail 125. When the pinion gear 340 is engaged with the rack gear 125a, the upper roller 360 prevents an elastic force, provided by the elastic body 390, from being concentrated on the pinion gear 340. A plurality of upper rollers 360 may be provided.

The lower frame 370 forms a lower frame of the balancing unit 300. The lower frame 370 is disposed on an outer diameter surface of the guide rail 125. The outer diameter surface of the guide rail 125 refers to a surface that faces the inner diameter surface on the inner side of the guide rail 125. The lower frame 370 is formed in an arc shape so as to move along the guide rail 125. The lower frame 370 includes a lower roller 380.

The lower roller 380 is rotatably provided at the lower frame 370. The lower roller 380 may roll while being firmly pressed against the outer diameter surface of the guide rail 125. The lower roller 380 is provided to prevent the lower frame 370 from being directly in contact with the outer diameter surface of the guide rail 125. A plurality of lower rollers 380 may be provided.

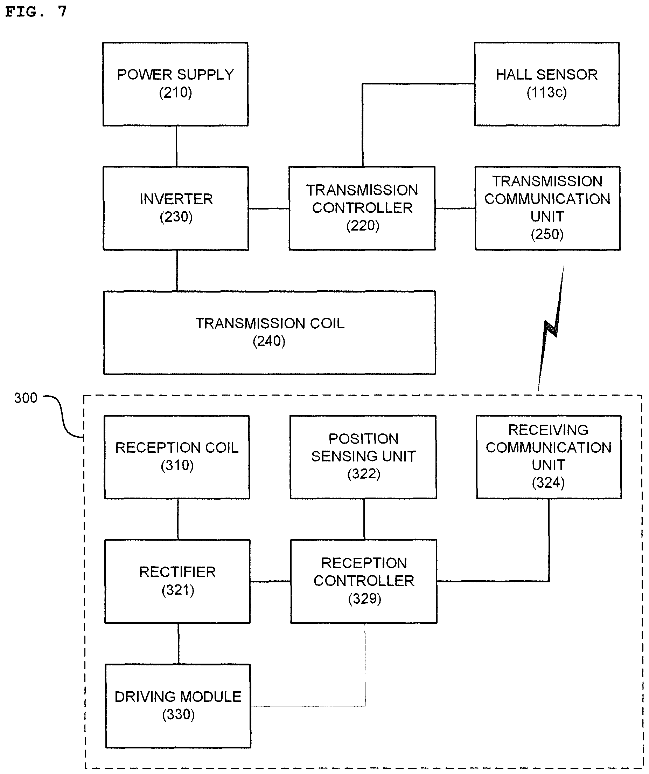

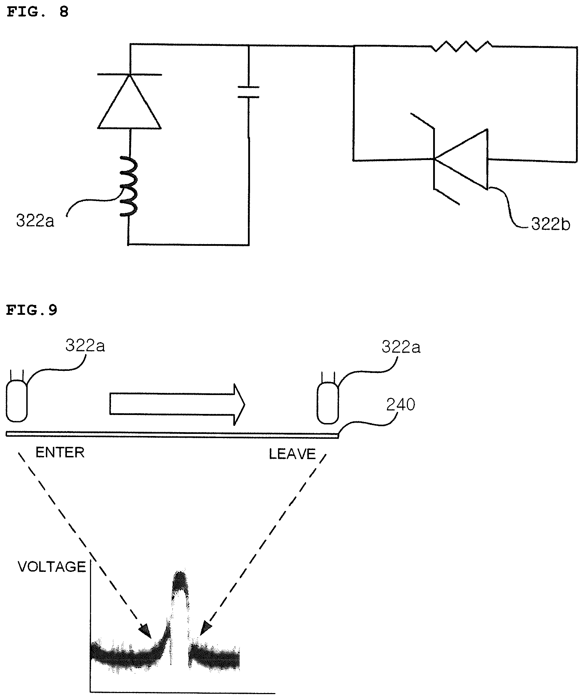

FIG. 7 is a block diagram of a washing machine according to an embodiment of the present invention; FIG. 8 is a circuit diagram of a position detecting unit of a washing machine according to an embodiment of the present invention; and FIG. 9 is a view exemplifying generation of a position signal in the position detecting unit of the washing machine according to the embodiment of the present invention.

The washing machine according to an embodiment of the present includes: a power supply 210 which is connected with an external power source to provide power; the aforementioned transmission coil 240 which generates a magnetic field to transmit power to the balancing unit 300 wirelessly; an inverter 230 which converts the DC input supplied from the power supply 210 into an AC waveform to apply to the transmission coil 240; a transmission communication unit 250 which receives the position signal transmitted from the balancing unit 300; and a transmission controller 220 which controls the inverter 230 and determines positions of the first balancing unit 300a and the second balancing unit 300b from the position signal received by the transmission communication unit 250 and the rotation angle of the drum motor 113 detected by the hall sensor 113c.

The power supply 210 converts commercial electric power, which is an alternating current supplied from an external power source, into a direct current, and supplies the direct current to the inverter 230. The power supply 210 may be provided in the cabinet 111 or at the control panel 114. The power supplied after conversion by the power supply 210 may also be supplied to the drum motor 113.

The inverter 230 includes a switching device which converts the direct current (DC) into the alternating current (AC). A driving frequency of the switching device is set by the transmission controller 220. The alternating current (AC) may drive the transmission coil 240 to form a magnetic field around the transmission coil 240.

As described above, the transmission coil 240 is disposed at the tub 122 and forms a magnetic field. The transmission coil 240 is connected with a transmitting capacitor (not shown) to form a resonance circuit. As the alternating current (AC) converted by the inverter 230 flows to the transmission coil 240, a magnetic field is formed around transmission coil 240 according to a change in current.

The transmission communication unit 250 communicates with a receiving communication unit 324 which will be described later. The transmission communication unit 250 and the receiving communication unit 324 communicate with each other through Radio Frequency (RF) or infrared rays. The transmission communication unit 250 receives the position signal of the balancing unit 300 from the receiving communication unit 324. The transmission communication unit 250 transmits, to the receiving communication unit 324, a control signal for controlling the driving module 330 of the balancing unit 300.

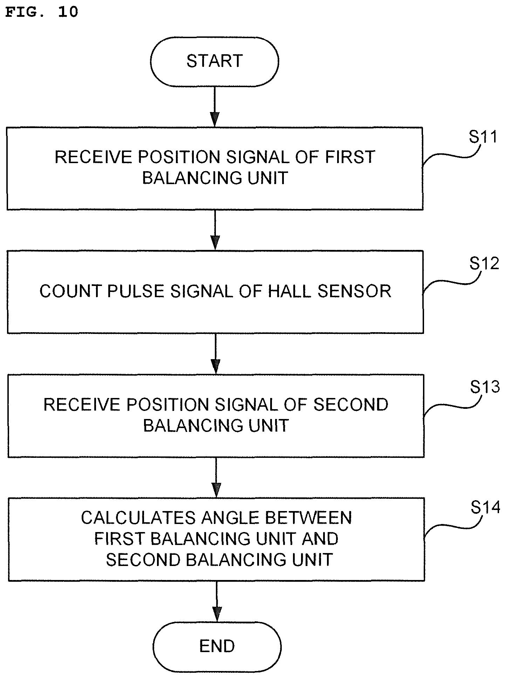

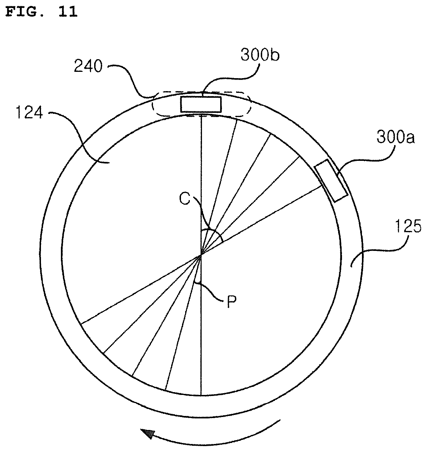

The transmission controller 220 controls a driving frequency of the inverter 230 so as to control a resonant frequency of the resonance circuit formed by the transmission coil 240. The transmission controller 220 receives the position signal of the balancing unit 300 from the transmission communication unit 250 and receives the pulse signal from the hall sensor 113c to determine the positions of the first balancing unit 300a and the second balancing unit 300b. The positions of the first balancing unit 300a and the second balancing unit 300b are changed in response to the rotation of the drum 124, and thus, such positions are positions of the first balancing unit 300a and the second balancing unit 300a relative thereto. In this embodiment, the positions of the first balancing unit 300a and the second balancing unit 300b are an angle therebetween. In this embodiment, the transmission controller 220 calculates the angle between the first balancing unit 300a and the second balancing unit 300b from the position signal of the balancing units 300 and the pulse signal of the hall sensor 113c. Detailed description thereof will be given later with reference to FIGS. 10 and FIG. 11.

The transmission controller 220 generates a control signal to move the balancing unit 300 by a degree of imbalance of the drum 124. The degree of imbalance of the drum 124 can be measured using a vibration sensor (not shown) which senses vibration of the tub 122 or may be measured using change in the rotational speed of the drum 124, which is measured using the hall sensor 113c. The transmission controller 220 may move the first balancing unit

300a and the second balancing unit 300b to have a set angle therebetween, move the first balancing unit 300a and the second balancing unit 300b in the same rotational direction, or move the first balancing unit 300a and the second balancing unit 300b in different rotational directions to change an angle therebetween.

The transmission controller 220 transmits, through the receiving communication unit 324, a control signal for controlling the driving module 330 of the balancing unit 300.

The balancing unit 300 according to an embodiment of the present invention includes: a reception coil 310 which generates electric power from the magnetic field formed by the transmission coil 240; a rectifier 321 which converts the power generated in the reception coil 310 from the alternating current (AC) to the direct current (DC); a position sensing unit 322 which senses a magnetic field formed by the transmission coil 240 when passing through the transmission coil 240, to generate a position signal; and a reception controller 329 which transfers the position signal generated by the position sensing unit 322 to the receiving communication unit 324 and controls the driving module 330 by using the control signal received by the receiving communication unit 324. The rectifier 321, the position sensing unit 322, the receiving communication unit 324, and the reception controller 329 are provided in the electronic component module 320.

As described above, the reception coil 310 generates electric power from the magnetic field formed by the transmission coil 240. The reception coil 310 is connected to a receiving capacitor (not shown) to form a resonant circuit. When the reception coil 310 passes the transmission coil 240 in response to rotation of the balancing unit 300 together with the drum 124, the reception coil 310 receives a magnetic field formed by the transmission coil 240 and generates an AC waveform power.

The rectifier 321 converts the power, generated by reception coil 310, from the alternating current (AC) to the direct current (DC). The rectifier 321 includes a smoother which make the rectified current smooth and stable current.

The driving module 330 generates power by the rectified power from the rectifier 321 to move the balancing unit 300. The power rectified by the rectifier 321 may be temporarily stored in a capacitor (not shown) and then applied to the driving module 330.

The position sensing unit 322 senses a magnetic field formed by the transmission coil 240 to generate a position signal. When the position sensing unit 322 passes the transmission coil 240 in response to rotation of the balancing unit 300 together with the drum 124, the position sensing unit 322 generates a position signal.

Referring to FIGS. 8 and 9, the position sensing unit 322 includes: the inductor component 322a which generates an electromotive force from the magnetic field formed by the transmission coil 240; and a zener diode element 322b which generates a position signal by adjusting the electromotive force, generated by the inductor component 322a, to a constant voltage magnitude. The position sensing unit 322 may further include a diode and a capacitor for rectifying the electromotive force generated by the inductor component 322a.

The inductor component 322a is arranged such that a cylindrical upper surface thereof is arranged parallel to a surface formed by the transmission coil 240, while facing the surface formed by the transmission coil 240. When the inductor component 322a enters above the transmission coil 240 in response to the rotation of the drum 124, an electromotive force is generated. On the contrary, when the inductor component 322a leaves from the transmission coil 240, no electromotive force is generated. The zener diode element 322b generates a position signal by adjusting the electromotive force, which is generated between entering and leaving of the inductor component 322a, to a constant voltage magnitude.

The receiving communication unit 324 communicates with the transmission communication unit 250. The receiving communication unit 324 transmits the position signal of the balancing unit 300 to the transmission communication unit 250. The receiving communication unit 324 receives a control signal for controlling the driving module 330 of the balancing unit 300 from the transmission communication unit 250. The receiving communication unit 324 may transmit identification information to the position signal.

The reception controller 329 controls the rectifier 321 to regulate the voltage output from the rectifier 321. The reception controller 329 receives the control signal from the receiving communication unit 324 to control the driving module 330.

The reception controller 329 receives the position signal generated by the position sensing unit 322, and transmits the position signal to the transmission communication unit 250 through the receiving communication unit 324. The reception controller 329 may transmit the position signal generated by the position sensing unit 322 to the receiving communication unit 324 including identification information. That is, the reception controller 329 of the first balancing unit 300a transmits identification information indicating a position signal of the first balancing unit 300a to the position signal through the receiving communication unit 324, and the reception controller 329 of the second balancing unit 300b transmits identification information indicating a position signal of the second balancing unit 300b to the position signal through the receiving communication unit 324.

While the driving module 330 operates, the reception controller 329 does not transmit the position signal generated by the position sensing unit 322 through the receiving communication unit 324. Since the position of the balancing unit 300 determined by the transmission controller 220 is a relative position, the reception controller 329 does not transmit the position signal when the balancing unit 300 is moved.

FIG. 10 is a flowchart of a method of controlling a washing machine according to an embodiment of the present invention; and FIG. 11 is a diagram how to determine a position of a balancing unit of a washing machine according to the embodiment of the present invention.

The transmission controller 220 receives a position signal of the first balancing unit 300a through the transmission communication unit 250 (S11). Upon rotation of the drum 124, the position sensing unit 322 of the first balancing unit 300a generates a position signal at a time when passing through the transmission coil 240, and transmits the position signal to the reception controller 329. The reception controller 329 transmits the position signal, generated by the position sensing unit 322, through the receiving communication unit 324. The transmission communication unit 250 receives the position signal of the first balancing unit 300a and transmits the position signal to the transmission controller 220.

The transmission controller 220 counts the number of pulse signals generated by the hall sensor 113c (S12). The hall sensor 113c generates a pulse signal whenever the rotor 113b rotates by the set unit angle (P). The hall sensor 113c transmits the generated pulse signal to the reception controller 329 and the transmission controller 220 counts the number of the pulse signals transmitted from immediately after receiving the position signal of the first balancing unit 300a.

The transmission controller 220 receives the position signal of the second balancing unit 300b through the transmission communication unit 250 (S13). Upon rotation of the drum 124, the position sensing unit 322 of the second balancing unit 300b generates a position signal at a time when passing through the transmission coil 240, and transmits the position signal to the reception controller 329. The reception controller 329 transmits the position signal, generated by the position sensing unit 322, through the receiving communication unit 324. The transmission communication unit 250 receives the position signal of the second balancing unit 300b and transmits the position signal to the transmission controller 220.

The transmission controller 220 calculates an angle C between the first balancing unit 300a and the second balancing unit 300b (S14). The transmission controller 220 calculates the angle (C) between the first balancing unit 300a and the second balancing unit 300b by counting the number of pulse signals (S) which are received after receipt of the position signal of the first balancing unit and before receipt of the position signal of the second balancing unit.

In the case where the unit angle P and the unit of the angle (C) are on the basis of degree, the angle (C) between the first balancing unit 300a and the second balancing unit 300b is calculated as follows.

```
C = (S % (360/P)) * P (% indicates the remainder operator)
```

The transmission controller 220 determines the relative positions of the first balancing unit 300a and the second balancing unit 300b by calculating the angle C between the first balancing unit 300a and the second balancing unit 300b.

## Claims

1. A washing machine, comprising:

   a tub (122) to contain wash water;
   a drum (124) having a cylindrical shape, rotatably provided in the tub (122) to accommodate laundry;
   a balancing unit (300) to move along a circumference of the drum (124); and
   a transmission coil (240) provided at the tub (122) to generate a magnetic field and transmit power wirelessly to the balancing unit (300),
   wherein the balancing unit (300) comprises:

   a reception coil (310) to generate electric power from the magnetic field formed by the transmission coil (240); and
   **characterized in that** the balancing unit (300) further comprises
   a position sensing unit (322) to sense the magnetic field formed by the transmission coil (240), and to generate a position signal when the balancing unit (300) passes through the transmission coil (240).

2. The washing machine of claim 1, wherein the balancing unit (300) further comprises a receiving communication unit (324) to transmit the position signal generated by the position sensing unit (322).

3. The washing machine of claim 2, further comprising:

   a transmission communication unit (250) to receive the position signal transmitted by the receiving communication unit (324);

a drum motor (113) to rotate the drum (124);

a hall sensor (113c) to detect a rotation angle of the drum motor (113); and

a transmission controller (220) to determine a position of the balancing unit (300) from the position signal and the rotation angle of the drum motor (113).

4. The washing machine of claim 3, wherein:

the balancing unit (300) comprises a first balancing unit (300a) and a second balancing unit (300b),

the hall sensor (113c) generates a pulse signal for each set unit angle, and

the transmission controller (220) calculates an angle between the first balancing unit (300a) and the second balancing unit (300b) by counting a number of pulse signals which are received after receipt of the position signal generated from the first balancing unit (300a) and before receipt of the position signal generated from the second balancing unit (300b).

5. The washing machine of any one of claims 1 to 4, wherein the position sensing unit (322) further comprises:

a cylindrical inductor component (322a) to generate an electromotive force from the magnetic field formed by the transmission coil (240); and

a zener diode element (322b) to generate a position signal by adjusting the electromotive force generated by the inductor component (322a) to a constant voltage magnitude.

6. The washing machine of claim 5, wherein the inductor component (322a) is arranged such that an upper surface of the cylindrical shape faces a surface formed by the transmission coil (240).

7. A method of controlling a washing machine, which comprises first and second balancing units (300a, 300b) to move along a circumference of a drum (124) with laundry loaded therein, and a wireless power transmitter provided at a tub (122) containing wash water to transmit power wirelessly to the first and second balancing units (300a, 300b), the method being **characterized by** the steps:

receiving (S11) a position signal generated by a position sensing unit (322) that is placed on the first balancing unit (300a), to sense the magnetic field formed by a transmission coil (240), when the first balance unit (300a) passes through the transmission coil (240);

counting (S12) a pulse signal for each set unit angle (P) generated by a hall sensor (113c) detecting a rotation angle of a drum motor (113), wherein the drum motor (113) rotates the drum (124);

receiving (S13) the position signal generated by the position sensing unit (322) that is placed on the second balancing unit (300b), to sense the magnetic field formed by the transmission coil (240) when the second balancing unit (300b) passes through the transmission coil (240);

calculating (S14) an angle (C) between the first balancing unit (300a) and the second balancing unit (300b) from a number of pulse signals (S) and the unit angle (P) which are received after receipt of the position signal of the first balancing unit (300a) and before receipt of the position signal of the second balancing unit (300b).

## Patentansprüche

1. Waschmaschine mit

einem Laugenbehälter (122) zur Aufnahme von Waschwasser,

einer zylinderförmigen Trommel (124), welche drehbar im Laugenbehälter (122) zur Aufnahme von Wäsche vorgesehen ist,

einer Ausgleichseinrichtung (300), die sich entlang eines Umfangs der Trommel (124) bewegen kann, und

einer im Laugenbehälter (122) vorgesehenen Sendespule (240) zur Erzeugung eines Magnetfelds und drahtlosen Übertragung von Leistung zur Ausgleichseinrichtung (300), wobei die Ausgleichseinrichtung (300) aufweist:

eine Empfangsspule (310) zur Erzeugung von elektrischer Energie aus dem von der Sendespule (240) erzeugten Magnetfeld und

**dadurch gekennzeichnet, dass** die Ausgleichseinrichtung (300) ferner aufweist:

eine Positionserfassungseinrichtung (322) zum Abtasten des durch die Sendespule (240) erzeugten Magnetfelds und zur Erzeugung eines Positionssignals, wenn die Ausgleichseinrichtung (300) die Sendespule (240) passiert.

**2.** Waschmaschine nach Anspruch 1, wobei die Ausgleichseinrichtung (300) ferner eine Empfangskommunikationseinrichtung (324) zum Senden des von der Positionserfassungseinrichtung (322) erzeugten Positionssignals aufweist.

**3.** Waschmaschine nach Anspruch 2, ferner mit:

einer Sendekommunikationseinrichtung (250) zum Empfangen des von der Empfangskommunikationseinrichtung (324) gesendeten Positionssignals,
einem Trommelmotor (113) zum Rotieren der Trommel (124),
einem Hall-Sensor (113c) zum Erfassen eines Rotationswinkels des Trommelmotors (113) und
eine Übertragungssteuerung (220) zum Bestimmen einer Position der Ausgleichseinrichtung (300) aus dem Positionssignal und dem Rotationswinkel des Trommelmotors (113).

**4.** Waschmaschine nach Anspruch 3, wobei
die Ausgleichseinrichtung (300) eine erste Ausgleichseinrichtung (300a) und eine zweite Ausgleichseinrichtung (300b) aufweist,
der Hall-Sensor (113c) ein Impulssignal für jeden festgelegten Einrichtungswinkel erzeugt und
die Übertragungssteuerung (220) einen Winkel zwischen der ersten Ausgleichseinrichtung (300a) und der zweiten Ausgleichseinrichtung (300b) durch Zählen einer Anzahl von Impulssignalen, die nach Empfang des von der ersten Ausgleichseinrichtung (300a) erzeugten Positionssignals und vor Empfang des von der zweiten Ausgleichseinrichtung (300b) erzeugten Positionssignals empfangen werden, berechnet.

**5.** Waschmaschine nach einem der Ansprüche 1 bis 4, wobei die Positionserfassungseinrichtung (322) ferner aufweist:

eine zylindrische Spulenkomponente (322a) zum Erzeugen einer elektromotorischen Kraft aus dem von der Sendespule (240) gebildeten Magnetfeld und
ein Zener-Diodenelement (322b) zum Erzeugen eines Positionssignals durch Einstellen der von der Spulenkomponenete (322a) erzeugten elektromotorischen Kraft auf eine konstante Spannungshöhe.

**6.** Waschmaschine nach Anspruch 5, wobei die Spulenkomponente (322a) so angeordnet ist, dass eine obere Fläche der zylindrischen Form einer durch die Sendespule (240) gebildeten Fläche gegenüberliegt.

**7.** Verfahren zur Steuerung einer Waschmaschine, welche erste und zweite Ausgleichseinrichtungen (300a, 300b), die sich entlang eines Umfangs einer mit Wäsche beladenen Trommel (124) bewegen können, und einen drahtlosen Leistungssender aufweist, der an einem Laugenbehälter (122) vorgesehen ist, welcher Waschwasser enthält, um den ersten und zweiten Ausgleichseinrichtungen (300a, 300b) drahtlos Leistung zuzuführen, wobei das Verfahren **gekennzeichnet ist durch** folgende Schritte:

Empfangen (S11) eines Positionssignals, welches von einer Positionserfassungseinrichtung (322) erzeugt wird, welche auf der ersten Ausgleichseinrichtung (300a) angeordnet ist, um das von einer Sendespule (240) erzeugte Magnetfeld abzutasten, wenn die erste Ausgleichseinrichtung (300a) die Sendespule (240) passiert,
Zählen (S12) eines Impulssignals für jeden bestimmten Einrichtungswinkel (P), welcher von einem Hall-Sensor (113c) erzeugt wird, der einen Rotationswinkel eines Trommelmotors (113) erfasst, wobei der Trommelmotor (113) die Trommel (124) dreht,
Empfangen (S13) des Positionssignals, welches von der Positionserfassungseinrichtung (322) erzeugt wird, welche auf der zweiten Ausgleichseinrichtung (300b) angeordnet ist, um das von der Sendespule (240) erzeugte Magnetfeld abzutasten, wenn die zweite Ausgleichseinrichtung (300b) die Sendespule (240) passiert,
Berechnen (S14) eines Winkels (C) zwischen der ersten Ausgleichseinrichtung (300a) und der zweiten Ausgleichseinrichtung (300b) aus einer Anzahl von Impulssignalen (S) und dem Einrichtungswinkel (P), welche nach Empfang des Positionssignals der ersten Ausgleichseinrichtung (300a) und vor Empfang des Positionssignals der zweiten Ausgleichseinrichtung (300b) empfangen werden.

**Revendications**

**1.** Machine à laver, comprenant :

une cuve (122) pour contenir de l'eau de lavage ;
un tambour (124) présentant une forme cylindrique, prévu de manière à pouvoir tourner dans la cuve (122) pour loger du linge ;
une unité d'équilibrage (300) pour se déplacer le long d'une circonférence du tambour (124) ; et
une bobine de transmission (240) prévue au niveau de la cuve (122) pour générer un champ magnétique et transmettre une puissance sans fil à l'unité d'équilibrage (300),
dans laquelle l'unité d'équilibrage (300) comprend :

une bobine de réception (310) pour générer une puissance électrique à partir du champ magnétique formé par la bobine de transmission (240) ; et
**caractérisée en ce que** l'unité d'équilibrage (300) comprend en outre une unité de détection de position (322) pour détecter le champ magnétique formé par la bobine de transmission (240), et pour générer un signal de position lorsque l'unité d'équilibrage (300) passe au travers de la bobine de transmission (240).

2. Machine à laver selon la revendication 1, dans laquelle l'unité d'équilibrage (300) comprend en outre une unité de communication de réception (324) pour transmettre le signal de position généré par l'unité de détection de position (322).

3. Machine à laver selon la revendication 2, comprenant en outre :

une unité de communication de transmission (250) pour recevoir le signal de position transmis par l'unité de communication de réception (324) ;
un moteur de tambour (113) pour faire tourner le tambour (124) ;
un capteur à effet Hall (113c) pour détecter un angle de rotation du moteur de tambour (113) ; et
un dispositif de commande de transmission (220) pour déterminer une position de l'unité d'équilibrage (300) à partir du signal de position et l'angle de rotation du moteur de tambour (113).

4. Machine à laver selon la revendication 3, dans laquelle :

l'unité d'équilibrage (300) comprend une première unité d'équilibrage (300a) et une seconde unité d'équilibrage (300b),
le capteur à effet Hall (113c) génère un signal de pulsation pour chaque angle d'unité défini, et
le dispositif de commande de transmission (220) calcule un angle entre la première unité de d'équilibrage (300a) et la seconde unité d'équilibrage (300b) en comptant un nombre de signaux de pulsation qui sont reçus après la réception du signal de position généré à partir de la première unité d'équilibrage (300a) et avant la réception du signal de position généré à partir de la seconde unité d'équilibrage (300b).

5. Machine à laver selon l'une quelconque des revendications 1 à 4, dans laquelle l'unité de détection de position (322) comprend en outre :

un composant inducteur cylindrique (322a) pour générer une force électromotrice à partir du champ magnétique formé par la bobine de transmission (240) ; et
un élément de diode Zener (322b) pour générer un signal de position par ajustement de la force électromotrice générée par le composant inducteur (322a) à une magnitude de tension constante.

6. Machine à laver selon la revendication 5, dans laquelle le composant inducteur (322a) est agencé de sorte qu'une surface supérieure de la forme cylindrique soit tournée vers une surface formée par la bobine de transmission (240).

7. Procédé de commande d'une machine à laver qui comprend des première et seconde unités d'équilibrage (300a, 300b) pour se déplacer le long d'une circonférence d'un tambour (124) avec du linge chargé dans celui-ci, et un transmetteur de puissance sans fil prévu au niveau d'une cuve (122) contenant de l'eau de lavage pour transmettre une puissance sans fil aux première et seconde unités d'équilibrage (300a, 300b), le procédé étant **caractérisé par** les étapes :

de réception (S11) d'un signal de position généré par une unité de détection de position (322) qui est placée sur la première unité d'équilibrage (300a), pour détecter le champ magnétique formé par une bobine de transmission (240), lorsque la première unité d'équilibrage (300a) passe au travers de la bobine de transmission (240) ;
de comptage (S12) d'un signal de pulsation pour chaque angle d'unité défini (P) généré par un capteur à effet Hall (113c) détectant un angle de rotation d'un moteur de tambour (113), dans lequel le moteur de tambour (113) fait tourner le tambour (124) ;

de réception (S13) du signal de position généré par l'unité de détection de position (322) qui est placée sur la seconde unité d'équilibrage (300b), pour détecter le champ magnétique formé par la bobine de transmission (240) lorsque la seconde unité d'équilibrage (300b) passe au travers de la bobine de transmission (240) ;

de calcul (S14) d'un angle (C) entre la première unité d'équilibrage (300a) et la seconde unité d'équilibrage (300b) à partir d'un nombre de signaux de pulsation (S) et de l'angle d'unité (P) qui sont reçus après la réception du signal de position de la première unité d'équilibrage (300a) et avant la réception du signal de position de la seconde unité d'équilibrage (300b).

**FIG. 1**

FIG. 2

FIG. 3

FIG. 4

FIG. 5

FIG. 6

FIG. 7

```
┌─────────────────┐                    ┌─────────────────┐
│  POWER SUPPLY   │                    │   HALL SENSOR   │
│     (210)       │                    │     (113c)      │
└────────┬────────┘                    └────────┬────────┘
         │                                      │
         │                                      │
┌────────┴────────┐   ┌─────────────────┐   ┌──┴──────────────┐
│                 │   │  TRANSMISSION   │   │  TRANSMISSION   │
│    INVERTER     ├───┤   CONTROLLER    ├───┤ COMMUNICATION   │
│     (230)       │   │     (220)       │   │     UNIT        │
└────────┬────────┘   └─────────────────┘   │     (250)       │
         │                                  └─────────────────┘
┌────────┴──────────────────────────────┐
│          TRANSMISSION COIL             │
│               (240)                    │
└────────────────────────────────────────┘
```

300

```
┌─────────────────────────────────────────────────────────────┐
│ ┌─────────────────┐  ┌─────────────────┐  ┌─────────────────┐│
│ │ RECEPTION COIL  │  │    POSITION     │  │    RECEIVING    ││
│ │     (310)       │  │  SENSING UNIT   │  │  COMMUNICATION  ││
│ │                 │  │     (322)       │  │     UNIT        ││
│ └────────┬────────┘  └────────┬────────┘  │     (324)       ││
│          │                    │           └────────┬────────┘│
│ ┌────────┴────────┐  ┌────────┴────────┐           │         │
│ │   RECTIFIER     │  │   RECEPTION     │           │         │
│ │     (321)       ├──┤   CONTROLLER    ├───────────┘         │
│ │                 │  │     (329)       │                     │
│ └────────┬────────┘  └────────┬────────┘                     │
│          │                    │                              │
│ ┌────────┴────────┐           │                              │
│ │ DRIVING MODULE  │           │                              │
│ │     (330)       ├───────────┘                              │
│ └─────────────────┘                                          │
└─────────────────────────────────────────────────────────────┘
```

FIG. 8

322a

322b

FIG.9

322a

322a

240

ENTER

LEAVE

VOLTAGE

FIG. 10

START

RECEIVE POSITION SIGNAL OF FIRST
BALANCING UNIT — S11

COUNT PULSE SIGNAL OF HALL SENSOR — S12

RECEIVE POSITION SIGNAL OF SECOND
BALANCING UNIT — S13

CALCULATES ANGLE BETWEEN
FIRST BALANCING UNIT AND
SECOND BALANCING UNIT — S14

END

FIG. 11

**EP 3 388 569 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20130114478 A